# EUROPÄISCHE PATENTANMELDUNG

(11) **EP 2 532 412 A1**
(43) Veröffentlichungstag der Anmeldung: **12.12.2012**
(21) Anmeldenummer: 11169492.3
(22) Anmeldetag: 10.06.2011
(51) Int. Cl.: B01D 53/14, B01D 53/62, C07D 211/58, C10L 3/10, F23J 15/04

(54) **Absorptionsmedium und Verfahren zur Absorption eines sauren Gases aus einer Gasmischung**

(71) Anmelder: Evonik Degussa GmbH, 45128 Essen (DE)
(72) Erfinder: Rolker, Dr. Jörn, 63755 Alzenau (DE); Seiler, Dr. Matthias, 64347 Griesheim (DE); Schneider, Rolf, 63584 Gründau-Rothenbergen (DE); Lenormant, Thibaut, 60389 Frankfurt am Main (DE)

(57) **Zusammenfassung**

Ein Absorptionsmedium, das Wasser, ein Amin (A) der Formel (I) 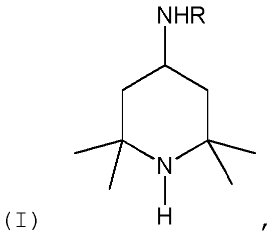 worin R ein n-Alkylrest mit 1 bis 4 Kohlenstoffatomen ist, und ein Alkanolamin (B), das ein tertiäres Amin oder ein sterisch gehindertes primäres oder sekundäres Amin ist, umfasst, weist eine hohe Absorptionskapazität für CO₂ bei einer hohen Absorptionsrate auf. Mit dem Absorptionsmedium lässt sich bei der Absorption von sauren Gasen aus einer Gasmischung auch ohne Zusatz eines Lösungsmittels eine Trennung des Absorptionsmediums in zwei flüssige Phasen oder die Ausfällung eines Feststoffs bei der Absorption von CO₂ und der Regenerierung des Absorptionsmediums vermeiden.

## Beschreibung

Die Erfindung betrifft ein Absorptionsmedium und ein Verfahren zur Absorption eines sauren Gases, insbesondere von CO₂, aus einer Gasmischung.

In zahlreichen industriellen und chemischen Prozessen treten Gasströme auf, die einen unerwünschten Gehalt von sauren Gasen, insbesondere von CO₂, aufweisen, deren Gehalt für die weitere Verarbeitung, für den Transport oder für eine Vermeidung von CO₂-Emissionen verringert werden muss.

Im industriellen Maßstab werden zur Absorption von CO₂ aus einer Gasmischung üblicherweise wässrige Lösungen von Alkanolaminen als Absorptionsmedium eingesetzt. Das beladene Absorptionsmedium wird durch Erwärmen, Entspannen auf einen niedrigeren Druck oder Strippen regeneriert, wobei das Kohlendioxid desorbiert wird. Nach dem Regenerationsprozess kann das Absorptionsmedium wieder verwendet werden. Diese Verfahren sind zum Beispiel in Rolker, J.; Arlt, W.; "Abtrennung von Kohlendioxid aus Rauchgasen mittels Absorption" in Chemie Ingenieur Technik 2006, 78, Seiten 416 bis 424 sowie in Kohl, A. L.; Nielsen, R. B., "Gas Purification", 5. Aufl., Gulf Publishing, Houston 1997 beschrieben.

Diese Verfahren haben jedoch den Nachteil, dass zur Abtrennung von CO₂ durch Absorption und nachfolgende Desorption relativ viel Energie benötigt wird und dass bei der Desorption nur ein Teil des absorbierten CO₂ wieder desorbiert wird, so dass in einem Zyklus aus Absorption und Desorption die Kapazität des Absorptionsmediums nicht ausreichend ist.

US 7,419,646 beschreibt ein Verfahren zur Entsäuerung von Abgasen, bei dem ein Absorptionsmedium verwendet wird, das bei der Absorption des sauren Gases zwei voneinander trennbare Phasen ausbildet. Als reaktive Verbindung zur Absorption eines sauren Gases wird in Spalte 6 unter anderem 4-Amino-2,2,6,6-tetramethylpiperidin genannt. Das Verfahren von US 7,419,646 hat den Nachteil, dass zusätzliche Apparate für die Trennung der bei der Absorption anfallenden zwei Phasen erforderlich sind.

US 2009/0199709 beschreibt ein ähnliches Verfahren, bei dem nach Absorption des sauren Gases durch Erhitzen des beladenen Absorptionsmediums zwei voneinander trennbare Phasen ausgebildet und voneinander getrennt werden. Auch hier wird als geeignete reaktive Verbindung zur Absorption eines sauren Gases anderem 4-Amino-2,2,6,6-tetramethylpiperidin genannt.

FR 2900841 und US 2007/0286783 beschreiben Verfahren zur Entsäuerung von Abgasen, bei denen aus dem beladenen Absorptionsmedium die mit CO₂ umgesetzte reaktive Verbindung durch Extraktion abgetrennt wird. Als reaktive Verbindung zur Absorption eines sauren Gases wird unter anderem 4-Amino-2,2,6,6-tetramethylpiperidin genannt.

WO 2010/089257 beschreibt ein Absorptionsmedium für die Absorption von CO₂ aus einer Gasmischung, das Wasser und ein 4-Amino-2,2,6,6-tetramethylpiperidin umfasst, wobei das Amin an der 4-Aminogruppe alkyliert sein kann. Bei Absorptionsmedien, die 4-Amino-2,2,6,6-tetramethylpiperidin als Absorptionsmittel enthalten, kommt es allerdings bei der Absorption von CO₂ leicht zur Ausfällung des Carbamatsalzes. WO 2010/089257 beschreibt den Zusatz von Lösungsmitteln, wie Sulfolan oder ionischen Flüssigkeiten, um das Absorptionsmedium einphasig zu halten und eine höhere Absorptionskapazität für CO₂ zu erzielen.

Es besteht deshalb weiterhin ein Bedarf nach einem Absorptionsmedium für CO₂, das gleichzeitig eine hohe Absorptionskapazität für CO₂ bei einer hohen Absorptionsrate aufweist und mit dem sich auch ohne Zusatz eines Lösungsmittels eine Trennung in zwei flüssige Phasen oder die Ausfällung eines Feststoffs bei der Absorption von CO₂ und der Regenerierung des Absorptionsmediums vermeiden lässt.

Es wurde nun gefunden, dass sich diese Aufgabe lösen lässt durch ein Absorptionsmedium, das ein 4-Amino-2,2,6,6-tetramethylpiperidin mit einem n-Alkylsubstituenten an der 4-Aminogruppe sowie ein tertiäres oder ein sterisch gehindertes primäres oder sekundäres Alkanolamin enthält.

Gegenstand der Erfindung ist deshalb ein Absorptionsmedium zur Absorption eines sauren Gases aus einer Gasmischung, das Wasser, ein Amin (A) der Formel (I) 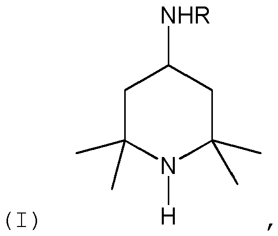 worin R ein n-Alkylrest mit 1 bis 4 Kohlenstoffatomen ist, und ein Alkanolamin (B), das ein tertiäres Amin oder ein sterisch gehindertes primäres oder sekundäres Amin ist, umfasst.

Gegenstand der Erfindung ist außerdem ein Verfahren zur Absorption eines sauren Gases aus einer Gasmischung durch in Kontakt bringen der Gasmischung mit dem erfindungsgemäßen Absorptionsmedium.

Das erfindungsgemäße Absorptionsmedium umfasst Wasser und ein Amin (A) der Formel (I), wobei R ein n-Alkylrest mit 1 bis 4 Kohlenstoffatomen ist. R kann demnach ein Methylrest, ein Ethylrest, ein n-Propylrest oder ein n-Butylrest sein. Vorzugsweise ist R ein n-Propylrest oder ein n-Butylrest, besonders bevorzugt ein n-Butylrest. Amine der Formel (I) können aus handelsüblichem Triacetonamin durch reduktive Aminierung, d.h. durch Umsetzung von Triacetonamin mit einem Amin der Formel RNH₂ und Wasserstoff in Gegenwart eines Hydrierkatalysators hergestellt werden.

Das erfindungsgemäße Absorptionsmedium umfasst außerdem ein Alkanolamin (B), das ein tertiäres Amin oder ein sterisch gehindertes primäres oder sekundäres Amin ist. Ein sterisch gehindertes primäres Amin im Sinne der Erfindung ist ein primäres Amin, bei dem die Aminogruppe an ein tertiäres Kohlenstoffatom gebunden ist, d.h. an ein Kohlenstoffatom, an das kein Wasserstoffatom gebunden ist. Ein sterisch gehindertes sekundäres Amin im Sinne der Erfindung ist ein sekundäres Amin, bei dem die Aminogruppe an ein sekundäres oder ein tertiäres Kohlenstoffatom gebunden ist, d.h. an ein Kohlenstoffatom, an das nur ein oder kein Wasserstoffatom gebunden ist.

Geeignete Alkanolamine (B) mit einer tertiären Aminogruppe sind Triethanolamin, N-Methyldiethanolamin, N,N-Dimethylethanolamin, Triisopropanolamin, N-Methyldiisopropanolamin, N,N-Dimethylisopropanolamin, N,N-Dimethylaminoethoxyethanol, N,N-Bis-(3-dimethylaminopropyl)-N-ethanolamin, N-(3-dimethylaminopropyl)-N,N-diethanolamin N,N-Bis-(3-dimethylaminopropyl)-N-isopropanolamin, N-(3-dimethylaminopropyl)-N,N-diisopropanolamin, N-Hydroxyethylpiperidin, N-Hydroxyethylmorpholin und N,N'-Bis-(hydroxyethyl)-piperazin. Ein bevorzugtes Alkanolamine (B) mit einer tertiären Aminogruppe sind N-Methyldiethanolamin.

Geeignete Alkanolamine (B) mit einer sterisch gehinderten primären oder sekundären Aminogruppe sind aus US 4,094,957 Spalten 10 bis 16 bekannt. Bevorzugte Alkanolamine (B) mit einer sterisch gehinderten primären Aminogruppe sind 2-Amino-2-methyl-1-propanol, 2-Amino-2-methyl-1-butanol und 2-Amino-2-methyl-3-pentanol. Besonders bevorzugt ist 2-Amino-2-methyl-1-propanol.

Im erfindungsgemäßen Absorptionsmedium liegt der Gehalt an Aminen (A) der Formel (I) vorzugsweise im Bereich von 5 bis 50 Gew.-% und der Gehalt an Alkanolaminen (B) vorzugsweise im Bereich von 5 bis 50 Gew.-%. Besonders bevorzugt liegt der Gehalt an Aminen (A) der Formel (I) im Bereich von 5 bis 30 Gew.-% und der Gehalt an Alkanolaminen (B) vorzugsweise im Bereich von 5 bis 30 Gew.-%. Der Gesamtgehalt an Aminen (A) der Formel (I) und an Alkanolaminen (B) im erfindungsgemäßen Absorptionsmedium liegt vorzugsweise im Bereich von 10 bis 60 Gew.-%, besonders bevorzugt im Bereich von 10 bis 45 Gew.-% und am meisten bevorzugt im Bereich von 10 bis 30 Gew.-%.

Die erfindungsgemäßen Absorptionsmedien weisen eine hohe Absorptionskapazität für CO₂ auf, die in der Regel höher ist, als aufgrund der Absorptionskapazitäten von Absorptionsmedien, die nur ein Amin (A) der Formel (I) oder nur ein Alkanolamin (B) enthalten, zu erwarten ist. Gleichzeitig zeigen die erfindungsgemäßen Absorptionsmedien ausreichend hohe Absorptionsraten für eine technische Anwendung. Die erfindungsgemäßen Absorptionsmedien zeigen auch ohne Zusatz eines Lösungsmittels bei der Absorption von CO₂ keine Ausfällung eines Feststoffs.

Das erfindungsgemäße Absorptionsmedium kann zusätzlich zu Wasser, Aminen (A) der Formel (I) und Alkanolaminen (B) noch ein oder mehrere physikalische Lösungsmittel (C) enthalten. Der Anteil an physikalischen Lösungsmitteln (C) kann dabei bis zu 50 Gew.-% betragen. Als physikalische Lösungsmittel (C) eignen sich Sulfolan, aliphatische Säureamide, wie N-Formylmorpholin, N-Acetylmorpholin, N-Alkylpyrrolidone, insbesondere N-Methyl-2-pyrrolidon, oder N-Alkylpiperidone, sowie Diethylenglykol, Triethylenglykol und Polyethylenglykole und deren Alkylether, insbesondere Diethylenglykolmonobutylether. Vorzugsweise enthält das erfindungsgemäße Absorptionsmedium jedoch kein physikalisches Lösungsmittel (C).

Das erfindungsgemäße Absorptionsmedium kann zusätzlich noch weitere Additive, wie Korrosionsinhibitoren, benetzungsfördernde Additive und Entschäumer aufweisen.

Als Korrosionsinhibitoren können im erfindungsgemäßen Absorptionsmedium alle Stoffe verwendet werden, die dem Fachmann zur Absorption von CO₂ unter Verwendung von Alkanolaminen als geeignete Korrosionsinhibitoren bekannt sind, insbesondere die in US 4,714,597 beschriebenen Korrosionsinhibitoren. Die Menge an Korrosionsinhibitoren kann bei einem erfindungsgemäßen Absorptionsmedium deutlich geringer als bei einem üblichen, Ethanolamin enthaltenden Absorptionsmedium gewählt werden, da die erfindungsgemäßen Absorptionsmedien gegenüber metallischen Werkstoffen deutlich weniger korrosiv sind als die üblicherweise verwendeten Ethanolamin enthaltenden Absorptionsmedien.

Als benetzungsförderndes Additiv werden vorzugsweise die aus WO 2010/089257 Seite 11, Zeile 18 bis Seite 13, Zeile 7 bekannten nichtionischen Tenside, zwitterionischen Tenside und kationischen Tenside verwendet.

Als Entschäumer können im erfindungsgemäßen Absorptionsmedium alle Stoffe verwendet werden, die dem Fachmann zur Absorption von CO₂ unter Verwendung von Alkanolaminen als geeignete Entschäumer bekannt sind.

Bei dem erfindungsgemäßen Verfahren zur Absorption eines sauren Gases aus einer Gasmischung wird die Gasmischung mit dem erfindungsgemäßen Absorptionsmedium in Kontakt gebracht.

Das saure Gas kann beispielsweise CO₂, COS, H₂S, CH₃SH oder SO₂ sein. Die Gasmischung kann auch mehrere dieser sauren Gase nebeneinander enthalten. Vorzugsweise enthält die Gasmischung als saures Gas CO₂ und/oder H₂S, besonders bevorzugt CO₂.

Die Gasmischung kann ein Erdgas, ein Methan enthaltendes Biogas aus einer Fermentation, Kompostierung oder Kläranlage, ein Verbrennungsabgas, ein Abgas aus einer Kalzinierungsreaktion, wie dem Brennen von Kalk oder der Herstellung von Zement, ein Restgas aus einem Hochofenprozess zur Eisenherstellung oder eine aus einer chemischen Umsetzung resultierende Gasmischung, wie beispielsweise ein Kohlenmonoxid und Wasserstoff enthaltendes Synthesegas oder ein Reaktionsgas einer Wasserstoffherstellung durch Dampfreformieren sein. Vorzugsweise ist die Gasmischung ein Synthesegas, ein Erdgas oder ein Verbrennungsabgas.

Die Gasmischung weist vor dem in Kontakt bringen mit dem Absorptionsmedium vorzugsweise einen Gehalt an CO₂ im Bereich von 0,1 bis 60 Vol-% auf, besonders bevorzugt im Bereich von 1 bis 40 Vol-%.

Für das erfindungsgemäße Verfahren können alle zum in Kontakt bringen einer Gasphase mit einer Flüssigphase geeigneten Apparate verwendet werden, um die Gasmischung mit dem Absorptionsmedium in Kontakt zu bringen. Vorzugsweise werden aus dem Stand der Technik bekannte Gaswäscher oder Absorptionskolonnen verwendet, beispielsweise Membrankontaktoren, Radialstromwäscher, Strahlwäscher, Venturi-Wäscher, Rotations-Sprühwäscher Füllkörperkolonnen, Packungskolonnen oder Bodenkolonnen. Besonders bevorzugt werden Absorptionskolonnen im Gegenstrombetrieb verwendet.

Im erfindungsgemäßen Verfahren wird die Absorption des sauren Gases vorzugsweise bei einer Temperatur des Absorptionsmediums im Bereich von 10 bis 80°C, besonders bevorzugt 20 bis 60°C, durchgeführt. Bei Verwendung einer Absorptionskolonne im Gegenstrombetrieb beträgt die Temperatur des Absorptionsmediums besonders bevorzugt 30 bis 60°C beim Eintritt in die Kolonne und 35 bis 70°C beim Austritt aus der Kolonne.

Die Absorption des sauren Gases wird vorzugsweise bei einem Druck der Gasmischung im Bereich von 0,5 bis 90 bar, besonders bevorzugt 0,9 bis 30 bar, durchgeführt. Für eine Absorption von CO₂ wird der Druck der Gasmischung vorzugsweise so gewählt, dass der Partialdruck von CO₂ in der Gasmischung vor der Absorption im Bereich von 0,1 bis 10 bar liegt. Eine Absorption von CO₂ aus Synthesegas wird vorzugsweise bei einem Druck der Gasmischung im Bereich von 1 bis 90 bar, besonders bevorzugt 5 bis 60 bar, durchgeführt. Eine Absorption von CO₂ aus Ergas wird vorzugsweise bei einem Druck der Gasmischung im Bereich von 5 bis 90 bar, besonders bevorzugt 10 bis 80 bar, durchgeführt. Eine Absorption von CO₂ aus einem Verbrennungsabgas wird vorzugsweise bei einem Druck der Gasmischung im Bereich von 0,8 bis 1,5 bar, besonders bevorzugt 0,9 bis 1,1 bar, durchgeführt, damit das Verbrennungsabgas nicht vorher verdichtet werden muss.

In einer bevorzugten Ausführungsform des erfindungsgemäßen Verfahrens ist das saure Gas CO₂ und im Absorptionsmedium absorbiertes CO₂ wird durch Erhöhen der Temperatur und/oder Verringern des Drucks wieder desorbiert und das Absorptionsmedium nach dieser Desorption von CO₂ wieder zur Absorption von CO₂ verwendet. Durch einen solchen zyklischen Prozess aus Absorption und Desorption kann CO₂ aus der Gasmischung ganz oder teilweise abgetrennt und getrennt von anderen Komponenten der Gasmischung erhalten werden.

Alternativ zum Erhöhen der Temperatur oder dem Verringern des Drucks oder zusätzlich zu einer Temperaturerhöhung und/oder Druckverringerung kann auch eine Desorption durch Strippen des mit CO₂ beladenen Absorptionsmediums mit einem Gas durchgeführt werden.

Wenn bei der Desorption von CO₂ zusätzlich auch Wasser aus dem Absorptionsmedium entfernt wird, kann dem Absorptionsmedium vor der Wiederverwendung zur Absorption gegebenenfalls noch Wasser zugesetzt werden.

Für die Desorption können alle Apparate verwendet werden, die aus dem Stand der Technik zur Desorption eines Gases aus einer Flüssigkeit bekannt sind. Vorzugsweise wird die Desorption in einer Desorptionskolonne durchgeführt. Alternativ kann die Desorption von CO₂ auch in einer oder mehreren Flash-Verdampfungsstufen durchgeführt werden.

Die Desorption wird vorzugsweise bei einer Temperatur im Bereich von 30 bis 180°C durchgeführt. Bei einer Desorption durch Erhöhen der Temperatur wird die Desorption von CO₂ vorzugsweise bei einer Temperatur des Absorptionsmediums im Bereich von 50 bis 180°C, besonders bevorzugt 80 bis 150°C, durchgeführt. Die Temperatur bei der Desorption liegt dabei vorzugsweise mindestens 20 °C, besonders bevorzugt mindestens 50 °C, oberhalb der Temperatur bei der Absorption.

Bei einer Desorption durch Verringern des Drucks wird die Desorption von CO₂ vorzugsweise bei einem Gesamtdruck in der Gasphase im Bereich von 0,01 bis 10 bar, insbesondere 0,1 bis 5 bar, durchgeführt. Der Druck bei der Desorption liegt dabei vorzugsweise mindestens 1,5 bar, besonders bevorzugt mindestens 4 bar, unterhalb des Drucks bei der Absorption und liegt am meisten bevorzugt bei Atmosphärendruck.

Da das erfindungsgemäße Absorptionsmedium eine hohe Absorptionskapazität für CO₂ bei einer hohen Absorptionsrate aufweist und im erfindungsgemäßen Verfahren als homogene Lösung vorliegt, kann das erfindungsgemäße Verfahren in einfach aufgebauten Anlagen eingesetzt werden, wie sie im Stand der Technik zur Gaswäsche mit wässrigen Lösungen von Ethanolamin eingesetzt werden und erreicht dabei eine im Vergleich zu Ethanolamin verbesserte Absorptionsleistung für CO₂. Gleichzeitig wird im Vergleich zu Ethanolamin wesentlich weniger Energie zur Desorption von CO₂ benötigt.

In einer bevorzugten Ausführungsform des erfindungsgemäßen Verfahrens erfolgt die Desorption zuerst durch Druckerniedrigung in einer oder mehreren aufeinanderfolgenden Flash-Verdampfungsstufen gefolgt von Strippen mit einem Inertgas, wie beispielsweise Luft oder Stickstoff, in einer Desorptionskolonne. In der letzten Flash-Verdampfungsstufen wird der Druck vorzugsweise auf 1 bis 5 bar, besonders bevorzugt auf 1 bis 2 bar abgesenkt. Das Strippen in der Desorptionskolonne erfolgt vorzugsweise bei einer Temperatur des Absorptionsmediums im Bereich von 60 bis 100°C. Durch die Kombination von Flash-Verdampfung und Strippen kann mit geringem Energiebedarf ein niedriger Restgehalt des Absorptionsmediums an CO₂ nach Desorption erreicht werden. Auf diese Weise kann die erforderliche Menge an Absorptionsmedium im Gesamtprozess gesenkt werden und der Bedarf an thermischer Energie für die Desorption von CO₂ verringert werden.

Die nachfolgenden Beispiele verdeutlichen die Erfindung, ohne jedoch den Gegenstand der Erfindung zu beschränken.

### Beispiele

Die untersuchten Absorptionsmedien sind in Tabelle 1 zusammengestellt.

Zur Bestimmung der CO₂-Beladung, des CO₂-Hubs und der relativen Absorptionsrate wurden 150 g Absorptionsmedium in einem thermostatisierbaren Behälter mit aufgesetztem und auf 3°C gekühltem Rückflusskühler vorgelegt. Nach Aufheizen auf 40°C bzw. 100°C wurde über eine Fritte am Behälterboden eine Gasmischung aus 14 Vol-% CO₂, 80 Vol-% Stickstoff und 6 Vol-% Sauerstoff mit einer Flussrate von 59 1/h durch das Absorptionsmedium geleitet und die CO₂-Konzentration im aus dem Rückflusskühler austretenden Gasstrom über die IR-Absorption mit einem CO₂-Analysator bestimmt. Durch Integration der Differenz des CO₂-Gehalts im eingeleiteten Gasstrom und im austretenden Gasstrom wurde die aufgenommene CO₂-Menge ermittelt und die
Gleichgewichtsbeladung des Absorptionsmediums mit CO₂ berechnet. Der CO₂-Hub wurde als Differenz der bei 40°C und 100°C aufgenommenen CO₂-Mengen berechnet. Aus der Steigung der Kurve der CO₂-Konzentration im austretenden Gasstrom für den Konzentrationsanstieg von 1 Vol-% auf 12 Vol-% wurde eine relative Absorptionsrate von CO₂ im Absorptionsmedium bestimmt. Die so bestimmten Gleichgewichtsbeladungen bei 40 und 100°C in mol CO₂ / mol Amin, der CO₂-Hub in mol CO₂ / kg Absorptionsmedium und die auf Beispiel 1 mit 100 % bezogene relative Absorptionsrate von CO₂ sind in Tabelle 1 angeführt.

Mit den erfindungsgemäßen Absorptionsmedien wird ein besserer CO₂-Hub erzielt, als auf Grund der Anteile der beiden Amine und deren CO₂-Hub erwartet wird. Die AMP enthaltenden Absorptionsmedien zeigen sogar einen deutlich besseren CO₂-Hub als bei Verwendung der einzelnen Amine. Die nicht erfindungsgemäßen Absorptionsmedien der Beispiele 5, 9 und 13, die zusätzlich zu einem Amin (A) der Formel (I) das primäre, nicht sterisch gehinderte Alkanolamin Ethanolamin enthalten, zeigen dagegen einen schlechteren CO₂-Hub, als auf Grund der Anteile der beiden Amine und deren CO₂-Hub erwartet wird.

**Tabelle 1**

| Beispiel | 1* | 2* | 3* | 4* | 5* | 6 | 7 | 8* | 9* | 10 | 11 |
|---|---|---|---|---|---|---|---|---|---|---|---|
| Anteile in Gew.-% | | | | | | | | | | | |
| Wasser | 70 | 70 | 70 | 70 | 70 | 70 | 70 | 70 | 70 | 70 | 70 |
| MEA | 30 | 0 | 0 | 0 | 20 | 0 | 0 | 0 | 20 | 0 | 0 |
| MDEA | 0 | 30 | 0 | 0 | 0 | 20 | 0 | 0 | 0 | 20 | 0 |
| AMP | 0 | 0 | 30 | 0 | 0 | 0 | 20 | 0 | 0 | 0 | 20 |
| Me-TAD | 0 | 0 | 0 | 30 | 10 | 10 | 10 | 0 | 0 | 0 | 0 |
| Pr-TAD | 0 | 0 | 0 | 0 | 0 | 0 | 0 | 30 | 10 | 10 | 10 |
| Bu-TAD | 0 | 0 | 0 | 0 | 0 | 0 | 0 | 0 | 0 | 0 | 0 |
| Beladung bei 40°C in mol/mol | 0,45 | 0,38 | 0, 55 | ** | 0, 68 | 0,76 | 0, 96 | 1,53 | 0,73 | 0,70 | 0, 89 |
| Beladung bei 100°C in mol/mol | 0,22 | 0,05 | 0,09 | ** | 0,43 | 0,20 | 0,23 | 0,39 | 0,44 | 0, 14 | 0,16 |
| CO₂-Hub in mol/kg | 1,15 | 0,83 | 1,55 | ** | 0, 96 | 1,27 | 2,08 | 1,71 | 1,09 | 1,22 | 1, 99 |
| Relative Absorptionsrate in % | 100 | 3 | 31 | ** | 75 | 58 | 31 | 41 | 94 | 79 | 55 |

**Tabelle 1 (Fortsetzung)**

| Beispiel | 12* | 13* | 14 | 15 |
|---|---|---|---|---|
| Anteile in Gew.-% | | | | |
| Wasser | 70 | 70 | 70 | 70 |
| MEA | 0 | 20 | 0 | 0 |
| MDEA | 0 | 0 | 20 | 0 |
| AMP | 0 | 0 | 0 | 20 |
| Me-TAD | 0 | 0 | 0 | 0 |
| Pr-TAD | 0 | 0 | 0 | 0 |
| Bu-TAD | 30 | 10 | 10 | 10 |
| Beladung bei 40°C in mol/mol | 1,38 | 0,75 | 0, 69 | 0, 84 |
| Beladung bei 100°C in mol/mol | 0,20 | 0,44 | 0,13 | 0,18 |
| CO₂-Hub in mol/kg | 1, 66 | 1,16 | 1,21 | 1,80 |
| Relative Absorptionsrate in % | 50 | 116 | 57 | 44 |

| | | | | |
|---|---|---|---|---|
| * nicht erfindungsgemäß ** Beim Begasen fiel Feststoff aus MEA: Ethanolamin MDEA: N-Methyldiethanolamin AMP: 2-Amino-2-methyl-1-propanol Me-TAD: 4-Methylamino-2,2,6,6-tetramethylpiperidin Pr-TAD: 4-(n-Propylamino)-2,2,6,6-tetramethylpiperidin Bu-TAD: 4-(n-Butylamino)-2,2,6,6-tetramethylpiperidin | | | | |

Für die Absorptionsmedien der Beispiele 4 bis 15 wurde außerdem die Temperatur bestimmt, bei der eine Entmischung des mit CO₂ beladenen und des CO₂-freien Absorptionsmediums beim Erhitzen eintritt. Zum Beladen mit CO₂ wurde das Absorptionsmedium vor dem Verschließen des Glasbehälters mit reinem CO₂ bei 1 bar und 20°C gesättigt. Das Absorptionsmedium wurde dann in einem verschlossenen druckfesten Glasbehälter langsam erhitzt, bis eine Trübung oder Trennung in zwei flüssige Phasen erkennbar war. Die so bestimmten Entmischungstemperaturen sind in Tabelle 2 angeführt. Ein mit dem Symbol > gekennzeichneter Eintrag bedeutet, dass bis zu dieser Temperatur keine Entmischung eintrat und der Versuch aus Sicherheitsgründen bei der angegebenen Temperatur beendet wurde.

Die Daten in Tabelle 2 zeigen, dass die erfindungsgemäßen Absorptionsmedien im Vergleich zu Absorptionsmedien, die nur Amin (A) der Formel (1) enthalten, deutlich höhere Entmischungstemperaturen und keinen Ausfall von Feststoff bei Beladen mit CO₂ zeigen.

**Tabelle 2**

| Beispiel | Entmischungstemperatur CO₂-beladen in °C | Entmischungstemperatur ohne CO₂ in °C |
|---|---|---|
| 4* | ** | > 120 |
| 5* | > 120 | > 120 |
| 6 | > 120 | > 120 |
| 7 | > 120 | > 120 |
| 8* | ** | 70 |
| 9* | > 120 | > 120 |
| 10 | > 110 | 100 |
| 11 | > 110 | 100 |
| 12* | 90 | 45 |
| 13* | > 125 | 82 |
| 14 | > 125 | 75 |
| 15 | 112 | 95 |

| | | |
|---|---|---|
| * nicht erfindungsgemäß ** Beim Beladen mit CO₂ fiel Feststoff aus | | |

## Patentansprüche

1. Absorptionsmedium zur Absorption eines sauren Gases aus einer Gasmischung,
umfassend Wasser, ein Amin (A) der Formel (I) 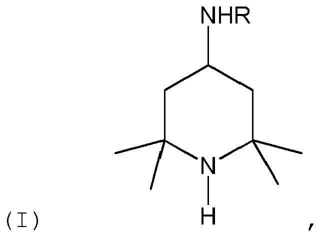 worin R ein n-Alkylrest mit 1 bis 4 Kohlenstoffatomen ist, und ein Alkanolamin (B), das ein tertiäres Amin oder ein sterisch gehindertes primäres oder sekundäres Amin ist.

2. Absorptionsmedium nach Anspruch 1,
**dadurch gekennzeichnet,**
**dass** das Alkanolamin (B) N-Methyldiethanolamin ist.

3. Absorptionsmedium nach Anspruch 1,
**dadurch gekennzeichnet,**
**dass** das Alkanolamin (B) 2-Amino-2-methyl-1-propanol ist.

4. Absorptionsmedium nach einem der Ansprüche 1 bis 3, **dadurch gekennzeichnet,**
**dass** in Formel (I) R ein n-Propylrest oder ein n-Butylrest ist.

5. Absorptionsmedium nach einem der Ansprüche 1 bis 4, **dadurch gekennzeichnet,**
**dass** der Gehalt an Aminen (A) der Formel (I) im Bereich von 5 bis 50 Gew.-% und der Gehalt an Alkanolaminen (B) im Bereich von 5 bis 50 Gew.-% liegt.

6. Absorptionsmedium nach einem der Ansprüche 1 bis 5,
**dadurch gekennzeichnet,**
**dass** der Gesamtgehalt an Aminen (A) der Formel (I) und an Alkanolaminen (B) im Bereich von 10 bis 60 Gew.-% liegt.

7. Verfahren zur Absorption eines sauren Gases aus einer Gasmischung durch in Kontakt bringen der Gasmischung mit einem Absorptionsmedium gemäß einem der Ansprüche 1 bis 6.

8. Verfahren nach Anspruch 7,
**dadurch gekennzeichnet,**
**dass** die Gasmischung ein Synthesegas, ein Erdgas oder ein Verbrennungsabgas ist.

9. Verfahren nach Anspruch 7 oder 8,
**dadurch gekennzeichnet,**
**dass** die Gasmischung bei einem Druck im Bereich von 0,5 bis 90 bar mit dem Absorptionsmedium in Kontakt gebracht wird.

10. Verfahren nach einem der Ansprüche 7 bis 9,
**dadurch gekennzeichnet,**
**dass** das saure Gas CO₂ ist.

11. Verfahren nach Anspruch 10,
**dadurch gekennzeichnet,**
**dass** die Gasmischung einen anfänglichen Gehalt an CO₂ im Bereich von 0,1 bis 60 Vol-% aufweist.

12. Verfahren nach Anspruch 10 oder 11,
**dadurch gekennzeichnet,**
**dass** im Absorptionsmedium absorbiertes CO₂ durch Erhöhen der Temperatur und/oder Verringerung des Drucks wieder desorbiert wird und das Absorptionsmedium nach dieser Desorption von CO₂ wieder zur Absorption von CO₂ verwendet wird.

13. Verfahren nach Anspruch 12,
**dadurch gekennzeichnet,**
**dass** die Absorption bei einer Temperatur im Bereich von 10 bis 80°C und die Desorption bei einer Temperatur im Bereich von 30 bis 180°C durchgeführt wird.

14. Verfahren nach Anspruch 12 oder 13,
**dadurch gekennzeichnet,**
**dass** mit CO₂ beladenes Absorptionsmedium zur Desorption mit einem inerten Gas gestrippt wird.
